# EUROPEAN PATENT SPECIFICATION

(11) **EP 3 584 489 B1**
(45) Date of publication and mention of the grant of the patent: **26.07.2023**
(21) Application number: 18290069.6
(22) Date of filing: 19.06.2018
(51) Int. Cl.: F16L 37/088, F16L 37/14

(54) **COUPLING ARRANGEMENT AND CONNECTOR FOR A COUPLING ARRANGEMENT**
KUPPLUNGSANORDNUNG UND VERBINDER FÜR EINE KUPPLUNGSANORDNUNG
AGENCEMENT DE COUPLAGE ET CONNECTEUR POUR UN AGENCEMENT DE COUPLAGE

(43) Date of publication of application: 25.12.2019
(73) Proprietor: MANN+HUMMEL GmbH, 71636 Ludwigsburg (DE)
(72) Inventor: Sarrazin, Maxime, 53000 Laval (FR); Foulboeuf, Gwenael, 53260 Entrammes (FR); Marteau, Christophe, 53000 Laval (FR)
(74) Representative: Mann + Hummel Intellectual Property

(56) References cited:
- WO-A1-2017/060184
- DE-U1-202012 102 801
- US-A- 5 749 606
- US-A1- 2008 277 929

## Description

### Technical Field

The invention relates to a coupling arrangement and a connector for a coupling arrangement.

### Prior Art

Quick coupling arrangements for coupling liquid or gas pipe ducts are generally known in the art. For establishing the coupling, an inner connector is inserted into an outer connector and locked by an elastic detent spring which engages slots in the outer one of the two connectors to cooperate with an undercut of the inner connector to keep the connectors in place during operation. During operation such quick coupling arrangements are prone to vibrations, movements and influence of high pressure of the fluid in the pipe duct.

DE 20 2012 102 801 U1 discloses a coupling arrangement for securely connecting pipe ducts. For improving the stability of the connection, a straight slot is arranged in the circumferential wall of the outer connector. The end segments of the slot extend toward the opening of the outer connector through which the inner connector is inserted. The end segments enlarge the clearance of the slot in its end segments.

The US 5 749 606 A provides a connector assembly which includes an additional retainer that snaps onto the female member and captures the resilient member between the retainer and the female member.

Document WO 2017/060184 A1 relates to a connector with a connector body, which comprises an annular space which lies between a sleeve-like first casing section and a sleeve-like second casing section of the connector. The first casing section of the connector body is connected to the second casing section at a first end section by a first end wall section.

### Disclosure of the Invention

It is an object of the invention to provide a connector with improved stability during operation with reduced space requirements.

Another object of the invention is to provide a coupling arrangement with such a connector.

One object of the invention is achieved by a connector according to claim 1.

Another object of the invention is achieved by a coupling arrangement according to claim 6.

The other claims, the description and the drawings describe advantageous embodiments of the invention.

According to the invention, a connector for a coupling arrangement is proposed, comprising a female duct with an opening provided for receiving at least a male duct of a second connector, further comprising a circumferential sleeve being fixed to the female duct in axial direction, and the sleeve providing at least one slot, in particular at least three slots arranged in a circumferential wall of the sleeve. A locking element is provided having at least one insertion part, the at least one insertion part of the locking element extending through the at least one slot into the opening of the female duct and intended for clamping the male duct by extending, in a closed state of the locking element, into a circumferential locking groove of the male duct, when the second connector being arranged in its end position in the first connector.

The connector comprises a thermoplastic female duct in which an O-ring or a lip seal may be inserted in an axial direction of the female connector. This gasket may advantageously be locked in its position by a thermoplastic retaining segment, in particular a retaining ring, inserted axially as well. Thus a tight connection between the two connectors may be achieved.

Further, an external metallic sleeve is mounted axially and is crimped by bending teeth against a shoulder around the thermoplastic female duct. Thus the retaining segment is locked axially and the complete assembly is mechanically robust and resistant. The metallic sleeve offers the advantage of a coupling arrangement requiring only a relatively limited mounting space, because an external diameter of the coupling arrangement is smaller compared to using full plastic parts for the coupling arrangement. The size of the coupling arrangement is comparable to full metal connectors.

The metallic sleeve ensures mechanical resistance of the whole coupling arrangement. Thus a safe connection between the two connectors of the coupling arrangement may be achieved.

According to a further embodiment the retaining segment may be provided as an integral part of the female duct of the first connector.

The forward axial stop of the external metallic sleeve can be a circularly closed stop or only intermittent teeth with open areas in between the teeth.

A male duct of a second connector of a coupling arrangement whose design may correspond to a norm part can be introduced into the female duct and the assembly may be clamped by a metallic locking element that extends into a groove of the male duct. At least one opening, in particular three openings, in the metallic sleeve and the retaining segment may be provided to enable the insertion of the locking element.

The locking element can have a relative angular position with the female duct by adjusting the gap between the teeth of the sleeve that are crimped.

The inventive connector advantageously offers a hybrid concept composed of thermoplastic and metallic parts. The mechanical resistance may be achieved by the slots of the sleeve and the teeth of the sleeve that are bent around the female duct which proves to be an advantageous mechanical solution compared to slits in the thermoplastic female duct. The manufacturing processes of such a connector are based on the thermoplastic injection and the metal crimping assembly.

The connector exhibits compactness by maintaining robustness and offers a modular approach with an O-ring or lip seal compared to a completely thermoplastic solution.

According to an advantageous embodiment of the connector, a gasket may be provided inside the opening of the female duct, being fixed in an axial direction by a circular retaining segment of the female duct. This gasket may advantageously be locked in its position by a thermoplastic retaining segment, in particular a retaining ring, inserted axially as well. Thus a tight connection between the two connectors may be achieved.

According to an advantageous embodiment of the connector, the sleeve may be fixed in axial direction to the female duct by at least one crimp element and to the retaining segment by at least one stop element, wherein the at least one insertion part is extending through at least one slot in the retaining element being positioned underneath the at least one slot of the sleeve. The external metallic sleeve is mounted axially and is crimped by bending teeth against a shoulder around the thermoplastic female duct. Thus the retaining segment is locked axially and the complete assembly is mechanically robust and resistant. The metallic sleeve offers the advantage of a coupling arrangement requiring only a relatively limited mounting space, because an external diameter of the coupling arrangement is smaller compared to using full plastic parts for the coupling arrangement.

According to an advantageous embodiment of the connector, the at least one crimp element may be provided as a bent tooth, and/or wherein the at least one stop element may be provided as a bent tooth, and/or wherein the at least one stop element may be provided as a circularly closed stop. Thus a stable mechanical connection between the sleeve and the female duct may be achieved and maintained during operation, even under severe vibrational conditions.

The sleeve is a metallic part. A metallic sleeve exhibits significant mechanical strength and may be realized as a relatively thin part compared to a thermoplastic component. Thus the coupling arrangement may advantageously be used under limited mounting space conditions.

According to an advantageous embodiment of the connector, the retaining segment may be a ring element arranged in a receptacle of the female duct. First the gasket may be inserted into the receptacle of the female duct, followed by inserting the retaining segment which then holds the gasket in its mounting position. Thus a stable position of the gasket may be maintained for inserting the male duct of a second connector into the opening of the first connector.

The female duct and optionally the male duct are made of plastics material. Thermoplastic connectors, e.g., are widely used because plastics material offers relatively cheap production possibilities together with flexible design variations.

According to a another aspect of the invention, a coupling arrangement for coupling a first connector and a second connector is proposed, the first connector comprising a female duct with an opening for receiving at least a male duct of the second connector, the first connector further comprising a circumferential sleeve being fixed to the female duct in axial direction, and the sleeve providing at least one slot, in particular at least three slots, arranged in a circumferential wall of the sleeve. A locking element is provided having at least one insertion part, the at least one insertion part of the locking element extending through the at least one slot into the opening of the female duct and clamping the male duct by extending, in a closed state of the locking element, into a circumferential locking groove of the male duct, when the second connector being arranged in its end position in the first connector.

The inventive coupling arrangement may be used for charge air ducts, e.g. of air coolers, in order to provide safe connections with a limited external mounting space. Further the inventive coupling arrangement may advantageously be used for water pipes or any positive pressure, in particular high pressure ducts. A connector of the coupling arrangement may also be fixed to a housing of a fluid containing component.

The optimization of the turbo engines to reach future emission regulations leads to more and more severe working conditions for charge air ducts. Quick connectors are used on charge air ducts in order to ensure easy blind assembly and being able to be disassembled.

The inventive coupling arrangement includes a first connector comprising a thermoplastic female duct in which a gasket such as an O-ring or a lip seal or other suitable gasket may be inserted in an axial direction of the female duct. This gasket may advantageously be locked in its position by a thermoplastic retaining segment, in particular a retaining ring, inserted axially as well. Thus a tight connection between the two connectors may be achieved. The retaining segment may be a separate part or may be an integral part of the female duct.

Further, an external metallic sleeve is mounted axially and is crimped by bending teeth against a shoulder around the thermoplastic female duct. Thus the retaining segment is locked axially and the complete assembly is mechanically robust and resistant. The metallic sleeve offers the advantage of a coupling arrangement requiring only a relatively limited mounting space, because an external diameter of the coupling arrangement is smaller compared to using full plastic parts for the coupling arrangement. The size of the coupling arrangement is comparable to full metal connectors and, hence, smaller than conventional coupling arrangements comprising two thermoplastic connectors.

The metallic sleeve ensures mechanical resistance of the whole coupling arrangement. Thus a safe connection between the two connectors of the coupling arrangement may be achieved.

According to a further embodiment the retaining segment may be provided as an integral part of the female duct of the first connector.

The forward axial stop of the external metallic sleeve can be a circularly closed stop or only intermittent teeth with open areas in between the teeth.

The male duct of a second connector of the coupling arrangement whose design may correspond to a norm part can be introduced into the female duct and the assembly may be clamped by a metallic locking element that extends into a groove of the male duct. At least one opening, in particular three openings, in the metallic sleeve and the retaining segment may be provided to enable the insertion of the locking element.

The locking element can have a relative angular position with the female duct by adjusting the gap between the teeth of the sleeve that are crimped.

The inventive coupling arrangement advantageously offers a hybrid concept composed of thermoplastic and metallic parts. The mechanical resistance may be achieved by the slots of the sleeve and the teeth of the sleeve that are bent around the female duct which proves to be an advantageous mechanical solution compared to slits in the thermoplastic female duct.

The coupling arrangement exhibits compactness by maintaining robustness and offers a modular approach with an O-ring or lip seal compared to a completely thermoplastic solution.

Advantageously the coupling arrangement may be directly integrated into a charge air duct.

According to an advantageous embodiment of the coupling arrangement, a gasket may be provided inside the opening of the female duct, being fixed in an axial direction by a circular retaining segment of the female duct. This gasket may advantageously be locked in its position by a thermoplastic retaining segment, in particular a retaining ring, inserted axially as well. Thus a tight connection between the two connectors may be achieved.

According to an advantageous embodiment of the coupling arrangement, the sleeve may be fixed in axial direction to the female duct by at least one crimp element and to the retaining segment by at least one stop element, wherein the at least one insertion part is extending through at least one slot in the retaining segment being positioned underneath the at least one slot of the sleeve. The external metallic sleeve is mounted axially and is crimped by bending teeth against a shoulder around the thermoplastic female duct. Thus the retaining segment is locked axially and the complete assembly is mechanically robust and resistant. The metallic sleeve offers the advantage of a coupling arrangement requiring only a relatively limited mounting space, because an external diameter of the coupling arrangement is smaller compared to using full plastic parts for the coupling arrangement.

According to an advantageous embodiment of the coupling arrangement, the at least one crimp element may be provided as a bent tooth and/or the at least one stop element may be provided as a bent tooth, and/or the at least one stop element may be provided as a circularly closed stop. Thus a stable mechanical connection between the sleeve and the female duct may be achieved and maintained during operation, even under severe vibrational conditions.

The sleeve is a metallic part. A metallic sleeve exhibits significant mechanical strength and may be realized as a relatively thin part compared to a thermoplastic component. Thus the coupling arrangement may advantageously be used under limited mounting space conditions.

According to an advantageous embodiment of the coupling arrangement, the retaining segment may be a ring element arranged in a receptacle of the female duct. First the gasket may be inserted into the receptacle of the female duct, followed by inserting the retaining segment which then holds the gasket in its mounting position. Thus a stable position of the gasket may be maintained for inserting the male duct of a second connector into the opening of the first connector.

The female duct and optionally the male duct are made of plastics material. Thermoplastic connectors, e.g., are widely used because plastics material offers relatively cheap production possibilities together with flexible design variations.

### Brief Description of the Drawings

The present invention together with the above-mentioned and other objects and advantages may best be understood from the following detailed description of the embodiments, but not restricted to the embodiments, wherein is shown in:
- Figure 1: an isometric exploded view of a first connector comprising a female duct according to an embodiment of the invention;
- Figure 2: a side view of the connector in Figure 1 in an exploded depiction;
- Figure 3: a frontal view into the opening of the connector in Figure 1, depicting a section plane IV-IV;
- Figure 4: a sectional view of the connector in Figure 1 according to the section plane IV-IV;
- Figure 5: a side view of the connector in Figure 1;
- Figure 6: an isometric view of a retaining segment of a first connector according to an embodiment of the invention;
- Figure 7: a frontal view of the retaining element in Figure 6;
- Figure 8: an isometric view of a retaining segment of a connector according to another embodiment of the invention;
- Figure 9: a frontal view of the retaining element in Figure 8
- Figure 10: a sectional view of a male duct of a second connector according to an embodiment of the invention;
- Figure 11: a frontal view of coupling arrangement according to an embodiment of the invention with a second connector mounted into a first connector, depicting a section plane XII-XII; and
- Figure 12: a sectional view of the coupling arrangement in Figure 11 according to the section plane XII-XII.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

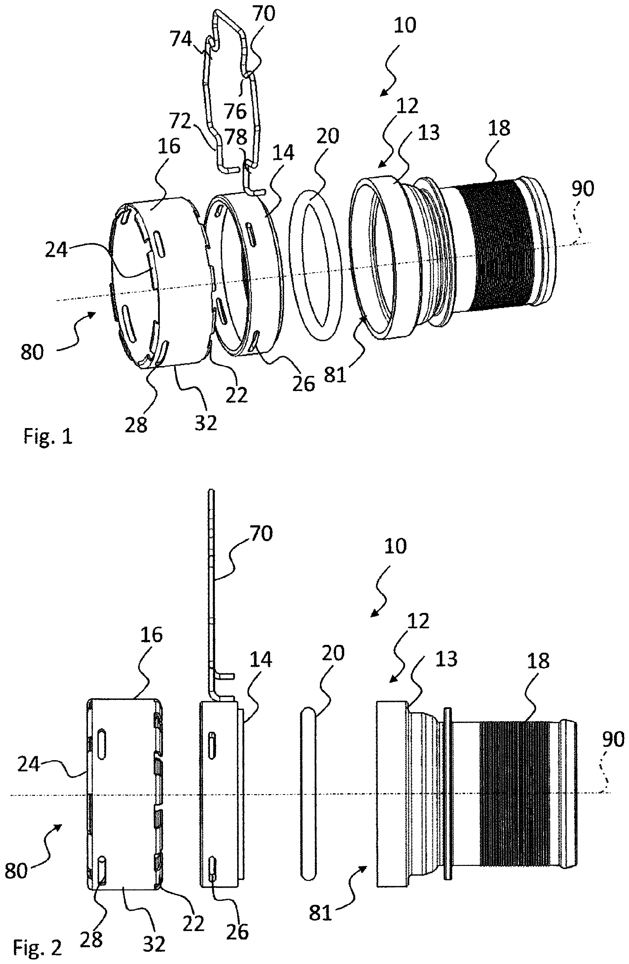

In Figures 1 to 5 a first connector 10 for a coupling arrangement 100, comprising a female duct 12 according to an embodiment of the invention is depicted. Figure 1 depicts an isometric exploded view of the first connector 10, whereas Figure 2 depicts a side view of the connector 10 in an exploded depiction.

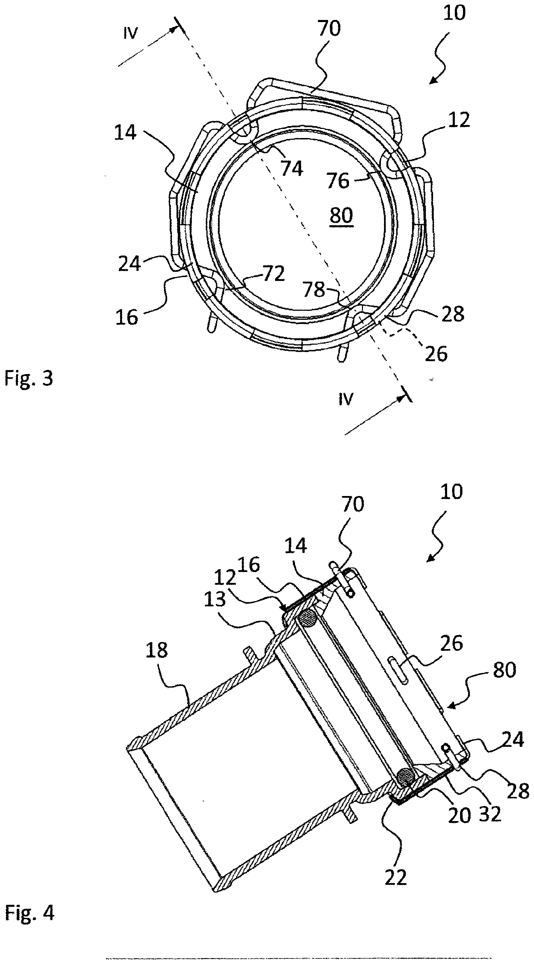

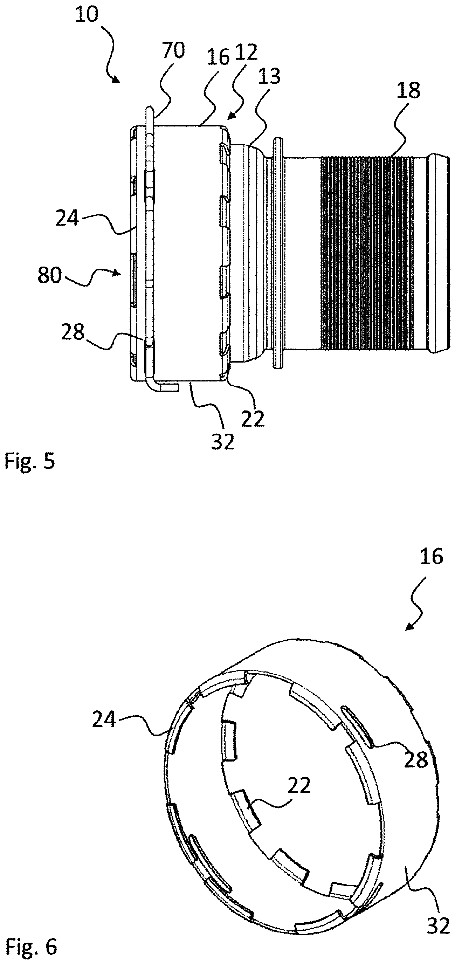

Figure 3 shows a frontal view into the opening 80 of the connector 10 in Figure 1, depicting a section plane IV-IV, whereas in Figure 4 a sectional view of the connector 10 in Figure 1 according to the section plane IV-IV is depicted. Figure 5 shows a side view of the connector 10 in Figure 1.

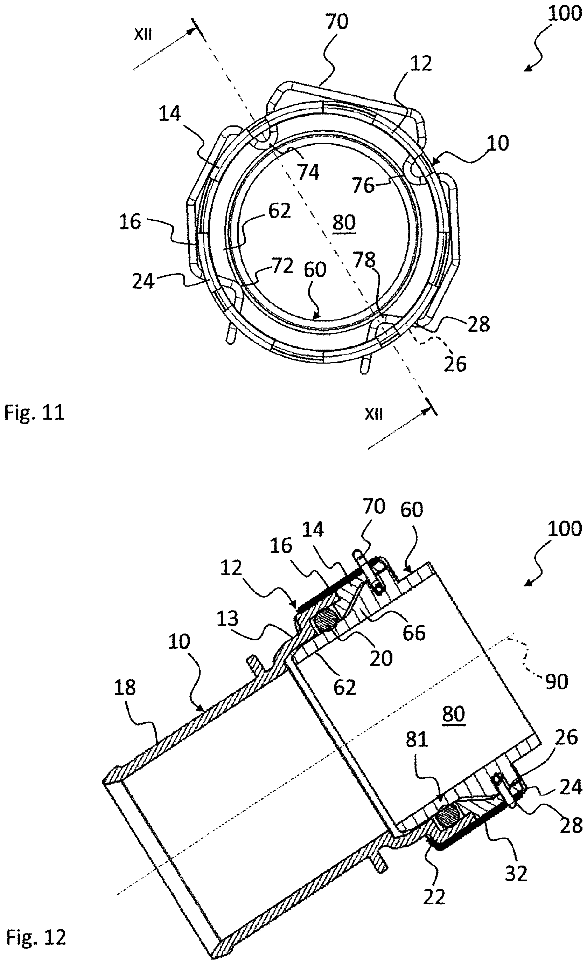

The connector 10 comprises the female duct 12 with an opening 80 provided for receiving at least a male duct 62 of a second connector 60. Further the connector 10 comprises a circumferential sleeve 16 being fixed to the female duct 12 in axial direction 90. The sleeve 16 provides at least one slot 28, in particular at least three slots 28 arranged in a circumferential wall 32 of the sleeve 16. In the embodiment shown in Figures 1 to 5, the sleeve provides four slots 28. A locking element 70 is provided having four insertion parts 72, 74, 76, 78. The locking element 70 itself may be manufactured from a metallic wire material. The insertion parts 72, 74, 76, 78 of the locking element 70, being shaped as knees pointing into the interior part of the female duct 12, extend through the four slots 28 into the opening 80 of the female duct 12 and are intended for clamping a male duct 62 by extending, in a closed state of the locking element 70, into a circumferential locking groove 64 of the male duct 62, when the second connector 60 is arranged in its end position in the first connector 10. This details of a coupling arrangement 100, where a second connector 60 is inserted into the first connector 10 is depicted in Figures 11 and 12. The locking element 70 may easily be mounted to the female duct 12 by bending the locking element 70 outwards and sliding it over the sleeve 16. When the insertion parts 72, 74, 76, 78 are positioned over the slots 28 they will snap into the slots 28 in order to enable a closing of the coupling arrangement 100.

A gasket 20 is provided inside the opening 80 of the female duct 12, being fixed in an axial direction by inserting a circular retaining segment 14 of the female duct 12 into a receptacle 81 of a duct portion 13 of the female duct 12. The retaining segment 14 is in this example embodiment a separate ring element arranged in the receptacle 81 of the duct portion 13 of the female duct 12.

The sleeve 16 is fixed in axial direction 90 to the female duct 12 by at least one crimp element 22, in the embodiment shown by a number of crimp elements 22, and to the retaining segment 14 by at least one stop element 24, in the embodiment shown by a number of stop elements 24. The insertion parts 72, 74, 76, 78 are extending through corresponding slots 26 in the retaining element 14 being positioned underneath the at least one slot 28 of the sleeve 16. The sleeve 16 may be positioned in a circumferential direction such that a slot 28 in the sleeve 16 directly corresponds to a slot 26 in the retaining segment 14 and an insertion part 72, 74, 76, 78 may be inserted into the two slots 26, 28, thus extending into an interior of the female duct 12.

The crimp elements 22 are provided as a bent tooth, as are the stop elements 24. Alternatively the at least one stop element 24 may be provided as a circularly closed stop.

The sleeve 16 is a metallic part such as from thin metal sheet material, whereas the female duct 12 and the male duct 62 are made of plastics material. The female duct is made of thermoplastic material.

The female duct 12 may be connected to further parts of a fluid duct, e.g. a bellow 18 as depicted in the Figures.

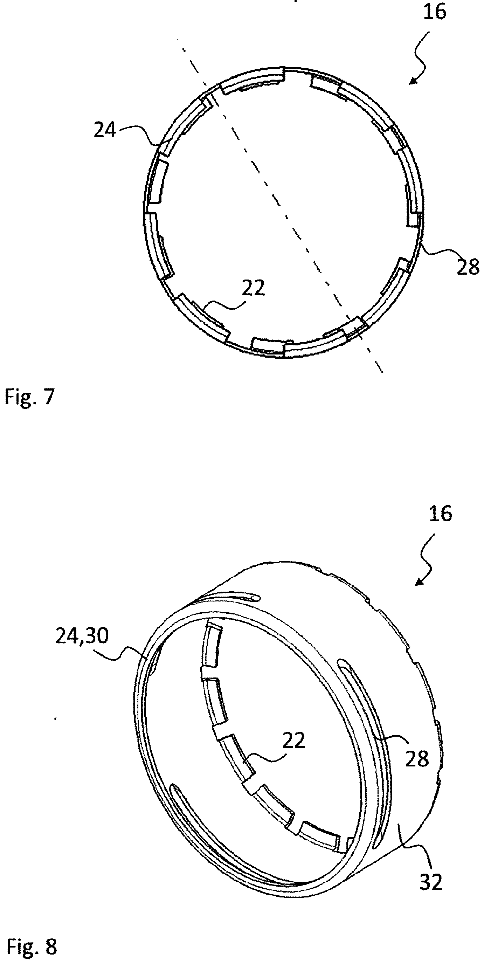

Figure 6 depicts an isometric view of a retaining segment 16 of the first connector 10 according to an embodiment of the invention, whereas in Figure 7 a frontal view of the retaining element 16 is depicted. Slots 28 in the circular wall 32 as well as the crimp elements 22 and the stop elements 24 are to be seen. The stop elements 24 in the embodiment shown cover a wider angular range than the crimp elements 22. Thus less stop elements 24 are applied to the retaining segment 16 than crimp elements 22 are applied to the female duct 12.

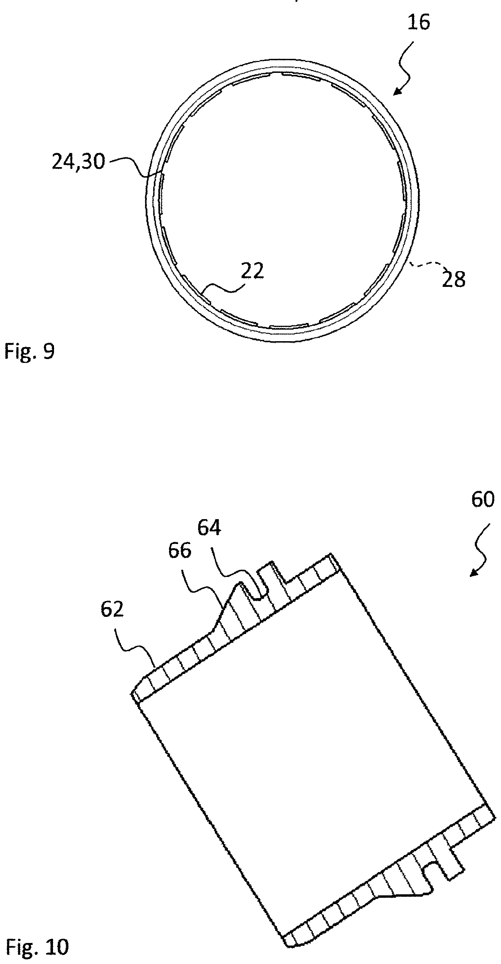

In Figure 8 an isometric view of a retaining segment 16 of a connector 10 according to another embodiment of the invention is shown, whereas in Figure 9 a frontal view of the retaining element 16 is depicted. In the embodiment shown the stop element 24 is realized as a circumferential stop 30 overlapping the retaining element 16 at a front side pointing away from the opening 80 of the female duct 12.

Figure 10 depicts a sectional view of a male duct 62 of a second connector 60 according to an embodiment of the invention. The male duct 62 exhibits a circumferential locking groove 64, manufactured in a shoulder part 66, which is a thickened part on an outer wall of the tube-like male duct 62. The locking groove 64 is intended for being clamped by the insertion parts 72, 74, 76, 78 of the locking element 70 of a first connector 10 with a female duct 12.

In Figure 11 a frontal view of coupling arrangement 100 is shown according to an embodiment of the invention with a second connector 60 mounted into a first connector 10 as depicted in Figures 1 to 5, whereas in Figure 12 a sectional view of the coupling arrangement 100 according to the section plane XII-XII depicted in Figure 11, is shown.

The male duct 62 of the second connector 60 is inserted into the opening 80 of the female part 12 of the first connector 10. The first connector 10 comprises a circumferential sleeve 16 being fixed to the female duct 12 in axial direction 90. The sleeve 16 provides slots 28, arranged in a circumferential wall 32 of the sleeve 16. A locking element 70 is provided having four insertion parts 72, 74, 76, 78, shaped as knees of the locking element 70 pointing into the interior of the female part 12. The insertion parts 72, 74, 76, 78 of the locking element 70 extend through the slots 28 into the opening 80 of the female duct 12 and clamp the male duct 62 by extending, in the closed state of the locking element 70, as depicted in Figures 11 and 12, into the circumferential locking groove 64 of the male duct 62, when the second connector 60 is arranged in its end position in the first connector 10.

As shown in the sectional view in Figure 12, a gasket 20 is provided inside the opening 80 of the female duct 12, being fixed in an axial direction by a circular retaining segment 14 in a duct portion 13 of the female duct 12. The retaining segment 14 in this example embodiment is a separate ring element arranged in the receptacle 81 of the duct portion 13 of the female duct 12.

The sleeve 16 is fixed in axial direction 90 to the female duct 12 by crimp elements 22 and to the retaining segment 14 by stop elements 24. The insertion parts 72, 74, 76, 78 extend through slots 26 in the retaining segment 14 being positioned underneath the slot 28s of the sleeve 16. The crimp elements 22 are provided as a bent teeth. In the embodiment shown, the stop elements 24 are also provided as bent teeth.

The sleeve 16 is made from a metallic material, such as steel, whereas the female duct 12 and the male duct 62 are made from plastics material, such as e.g. blow moulded parts.

The male duct 62 of the second connector 60 tightly fits into the female part 12 of the first connector 10. The male duct 62 presses the gasket 20 against an inner wall of the receptacle 81 of the female duct 12 thus providing a tight connection of the first connector 10 to the second connector 60 of the coupling arrangement 100.

## Claims

1. A connector (10) for a coupling arrangement (100), the connector comprising a female duct (12) with an opening (80) provided for receiving at least a male duct (62) of a second connector (60), further comprising a circumferential sleeve (16) being fixed to the female duct (12) in axial direction (90), the sleeve (16) providing at least one slot (28), in particular at least three slots (28) arranged in a circumferential wall (32) of the sleeve (16), wherein a locking element (70) is provided having at least one insertion part (72, 74, 76, 78), the at least one insertion part (72, 74, 76, 78) of the locking element (70) extending through the at least one slot (28) into the opening (80) of the female duct (12) and intended for clamping the male duct (62) by extending, in a closed state of the locking element (70), into a circumferential locking groove (64) of the male duct (62), when the second connector (60) is arranged in its end position in the first connector (10), **characterized in that** the sleeve (16) is an external metallic part, wherein the female duct (12) is made of thermoplastic material, wherein the external metallic sleeve (16) is mounted axially and is crimped by bending teeth against a shoulder around the thermoplastic female duct (12).

2. The connector according to claim 1, wherein a gasket (20) is provided inside the opening (80) of the female duct (12), being fixed in an axial direction by a circular retaining segment (14) of the female duct (12).

3. The connector according to claim 2, wherein the sleeve (16) is fixed in axial direction (90) to the female duct (12) by at least one crimp element (22) and to the retaining segment (14) by at least one stop element (24), wherein the at least one insertion part (72, 74, 76, 78) is extending through at least one slot (26) in the retaining element (14) being positioned underneath the at least one slot (28) of the sleeve (16).

4. The connector according to claim 3, wherein the at least one crimp element (22) is provided as a bent tooth, and/or wherein the at least one stop element (24) is provided as a bent tooth, and/or wherein the at least one stop element (24) is provided as a circularly closed stop.

5. The connector according to any one of the claims 1 to 4, wherein the retaining segment (14) is a ring element arranged in a receptacle (81) of the female duct (12).

6. A coupling arrangement (100) comprising a first connector (10) and a second connector (60), which can be coupled to each other, wherein the first connector is a connector according to any of the preceding claims.

## Patentansprüche

1. Steckverbinder (10) für eine Kupplungsanordnung (100), wobei der Steckverbinder einen Aufnahmekanal (12) mit einer Öffnung (80) umfasst, die zur Aufnahme mindestens eines Steckkanals (62) eines zweiten Steckverbinders (60) vorgesehen ist, ferner umfassend eine Umfangshülse (16), die an dem Aufnahmekanal (12) in Axialrichtung (90) befestigt ist, wobei die Hülse (16) mindestens einen Schlitz (28), insbesondere mindestens drei Schlitze (28) vorsieht, die in einer Umfangswand (32) der Hülse (16) angeordnet sind, wobei ein Verriegelungselement (70) vorgesehen ist, das mindestens ein Einführteil (72, 74, 76, 78) hat, wobei sich das mindestens eine Einführteil (72, 74, 76, 78) des Verriegelungselements (70) durch den mindestens einen Schlitz (28) in die Öffnung (80) des Aufnahmekanals (12) erstreckt und zum Klemmen des Steckkanals (62) durch Erweitern, in einem geschlossenen Zustand des Verriegelungselements (70), in eine umlaufende Verriegelungsnut (64) des Steckkanals (62) vorgesehen ist, wenn der zweite Steckverbinder (60) in seiner Endposition im ersten Steckverbinder (10) angeordnet ist, **dadurch gekennzeichnet, dass** die Hülse (16) ein äußeres Metallteil ist, wobei der Aufnahmekanal (12) aus Thermoplast hergestellt ist, wobei die äußere Metallhülse (16) axial angebracht ist und durch Biegezähne gegen eine Schulter um den thermoplastischen Aufnahmekanal (12) gecrimpt wird.

2. Steckverbinder nach Anspruch 1, wobei eine Dichtung (20) innerhalb der Öffnung (80) des Aufnahmekanals (12) vorgesehen ist, die in einer Axialrichtung durch ein kreisförmiges Haltesegment (14) des Aufnahmekanals (12) befestigt ist.

3. Steckverbinder nach Anspruch 2, wobei die Hülse (16) in Axialrichtung (90) an dem Aufnahmekanal (12) durch mindestens ein Crimpelement (22) und an dem Haltesegment (14) durch mindestens ein Anschlagelement (24) befestigt ist, wobei sich das mindestens eine Einführteil (72, 74, 76, 78) durch mindestens einen Schlitz (26) in dem Halteelement (14) erstreckt, das unterhalb des mindestens einen Schlitzes (28) der Hülse (16) angeordnet ist.

4. Steckverbinder nach Anspruch 3, wobei das mindestens eine Crimpelement (22) als Biegezahn ausgebildet ist, und/oder wobei das mindestens eine Anschlagelement (24) als Biegezahn ausgebildet ist, und/oder wobei das mindestens eine Anschlagelement (24) als kreisförmig geschlossener Anschlag ausgebildet ist.

5. Steckverbinder nach einem der Ansprüche 1 bis 4, wobei das Haltesegment (14) ein Ringelement ist, das in einer Aufnahme (81) des Aufnahmekanals (12) angeordnet ist.

6. Kupplungsanordnung (100), umfassend einen ersten Steckverbinder (10) und einen zweiten Steckverbinder (60), die miteinander verbunden werden können, wobei der erste Steckverbinder ein Steckverbinder nach einem der obigen Ansprüche ist.

## Revendications

1. Connecteur (10) pour un agencement de couplage (100), le connecteur comprenant un conduit femelle (12) avec une ouverture (80) prévue pour recevoir au moins un conduit mâle (62) d'un second connecteur (60), comprenant en outre un manchon circonférentiel (16) attaché au conduit femelle (12) dans la direction axiale (90), le manchon (16) prévoyant au moins une fente (28), notamment au moins trois fentes (28) disposées dans une paroi circonférentielle (32) du manchon (16), un élément de verrouillage (70) étant prévu ayant au moins une partie d'introduction (72, 74, 76, 78), la partie d'introduction (72, 74, 76, 78), au moins au nombre d'une, de l'élément de verrouillage (70) s'étendant à travers la fente (28), au moins au nombre une, dans l'ouverture (80) du conduit femelle (12) et destinée à serrer le conduit mâle (62) en s'étendant, dans un état de fermeture de l'élément de verrouillage (70), dans une rainure de verrouillage circonférentielle (64) du conduit mâle (62), lorsque le second connecteur (60) est disposé dans sa position finale dans le premier connecteur (10), **caractérisé en ce que** le manchon (16) est une pièce métallique externe, le conduit femelle (12) étant en matière thermoplastique, le manchon métallique externe (16) étant monté axialement et serti par des dents de flexion contre un épaulement autour du conduit femelle thermoplastique (12).

2. Connecteur selon la revendication 1, un joint (20) étant prévu à l'intérieur de l'ouverture (80) du conduit femelle (12), fixé dans une direction axiale par un segment de retenue circulaire (14) du conduit femelle (12).

3. Connecteur selon la revendication 2, le manchon (16) étant fixé dans la direction axiale (90) au conduit femelle (12) par au moins un élément de sertissage (22) et au segment de retenue (14) par au moins un élément de butée (24), la partie d'introduction (72, 74, 76, 78), au moins au nombre d'une, s'étendant à travers au moins une fente (26) dans l'élément de retenue (14) en étant positionnée sous la fente (28), au moins au nombre d'une, du manchon (16).

4. Connecteur selon la revendication 3, l'élément de sertissage (22), au moins au nombre d'un, étant conçu comme une dent de flexion, et/ou l'élément de butée (24) au moins au nombre d'un, étant conçu comme une dent de flexion, et/ou l'élément de butée (24), au moins au nombre d'un, étant conçu comme une butée fermée circulairement.

5. Connecteur selon l'une des revendications 1 à 4, le segment de retenue (14) étant un élément annulaire disposé dans un réceptacle (81) du conduit femelle (12).

6. Agencement de couplage (100) comprenant un premier connecteur (10) et un second connecteur (60), qui peuvent être couplés l'un à l'autre, le premier connecteur étant un connecteur selon l'une quelconque des revendications précédentes.
